# EUROPÄISCHE PATENTANMELDUNG

(11) **EP 3 263 295 A1**
(43) Veröffentlichungstag der Anmeldung: **03.01.2018**
(21) Anmeldenummer: 16176910.4
(22) Anmeldetag: 29.06.2016
(51) Int. Cl.: B25J 15/06, B66C 1/04, B65G 47/92

(54) **GREIFVORRICHTUNG ZUM GREIFEN VON FERROMAGNETISCHEN GEGENSTÄNDEN**

(71) Anmelder: J. Schmalz GmbH, 72293 Glatten (DE)
(72) Erfinder: STAHL, Tobias, 72293 Glatten (DE); MÜNZNER, Kay, 72250 Freudenstadt (DE); STORZ, Michael, 72186 Empfingen (DE)
(74) Vertreter: DREISS Patentanwälte PartG mbB

(57) **Zusammenfassung**

Eine Greifvorrichtung (10) zum Greifen von ferromagnetischen Gegenständen, mit einem Magneten (12), der durch einen Aktor zwischen einer Aktivstellung zum Greifen der Gegenstände und einer Passivstellung verlagerbar ist, ist im Hinblick auf hohe Haltekräfte und geringe Resthaltekräfte derart ausgestaltet und weitergebildet, dass ein Polschuh (16) mit einer Anlagefläche (18) für die zu greifenden Gegenstände vorgesehen ist, dass der Polschuh (16) Wandungen (20) aufweist, welche den Magneten (12) bezüglich einer Längsachse (22) nach außen umgeben und welche ein ferromagnetisches Material aufweisen, dass der Magnet (12) in dem Polschuh (16) entlang der Längsachse (22) verlagerbar ist, wobei der Magnet (12) eine Magnetisierungsrichtung (24) von wenigstens einem Nordpol (26) zu wenigstens einem Südpol (28) aufweist, und dass der Polschuh (16) derart ausgebildet ist, dass im Bereich der Pole (26, 28) die Wandungen (20) eine höhere Wandstärke aufweisen als in übrigen Bereichen des Polschuhs (16).

## Beschreibung

Die vorliegende Erfindung betrifft eine Greifvorrichtung zum Greifen von ferromagnetischen Gegenständen, mit einem Magneten, der durch einen Aktor zwischen einer Aktivstellung zum Greifen der Gegenstände und einer Passivstellung verlagerbar ist.

Eine Greifvorrichtung der eingangs genannten Art ist aus der DE 20 2005 004 456 U1 bekannt. Diese Greifvorrichtung weist einen längsverschieblich in einem Gehäuse geführten Magneten auf. Wird der Magnet aus dem Gehäuse herausgeschoben, lassen sich ferromagnetische Werkstücke greifen. Durch Einziehen des Magneten in das Gehäuse kann das anhaftende Werkstück gelöst werden, wobei die Stirnseite des Gehäuses als Abstreifer für das Werkstück dient. Bei der bekannten Greifvorrichtung besteht Raum für Optimierungen, insbesondere hinsichtlich einem Aufnehmen und Ablegen eines Werkstücks.

Der Erfindung liegt die Aufgabe zugrunde, eine Greifvorrichtung mit hohen Haltekräften und geringen Resthaltekräften zu schaffen. Ein geringer Krafteinsatz beim Aktivieren/Deaktivieren der Greifvorrichtung ist wünschenswert.

Die Erfindung löst die Aufgabe durch eine Greifvorrichtung mit den Merkmalen des Anspruchs 1. Die Greifvorrichtung dient zum Greifen und insbesondere auch zum Anheben von ferromagnetischen Gegenständen mit einem Magneten. Der Magnet ist durch einen Aktor zwischen einer Aktivstellung zum Greifen der Gegenstände und einer Passivstellung zum Loslassen verlagerbar.

Die Greifvorrichtung zeichnet sich dadurch aus, dass der Polschuh Wandungen aufweist, welche den Magneten zumindest in der Aktivstellung bezüglich einer Längsachse nach außen zumindest teilweise umgeben und welche ein ferromagnetisches Material aufweisen, dass der Magnet in dem Polschuh entlang der Längsachse in die Aktivstellung und die Passivstellung verlagerbar ist, wobei der Magnet eine Magnetisierungsrichtung von wenigstens einem Nordpol zu wenigstens einem Südpol aufweist, und dass der Polschuh derart ausgebildet ist, dass im Bereich der Pole die Wandungen eine höhere Wandstärke aufweisen als in übrigen Bereichen des Polschuhs.

Dies hat den Vorteil, dass vergleichsweise hohe Magnetkräfte zur Handhabung schwerer Lasten erreicht werden können. Durch die Ausgestaltung des Polschuhs mit Abschnitten geringerer Wandstärken außerhalb der Polbereiche, wobei diese Abschnitte bei aktiviertem Zustand der Greifvorrichtung das Magnetfeld des Magneten weiterleiten, ist beim Deaktivieren der Greifvorrichtung vergleichsweise wenig Energie erforderlich. Dabei werden keine oder allenfalls vernachlässigbar geringe Resthaltekräfte erzeugt.

Der Polschuh ist vorzugsweise aus ferromagnetischem Material ausgebildet. Dieses Material sollte eine möglichst geringe magnetische Remanenz aufweisen, um ein zeitnahes Ablegen oder Aufnehmen von Gegenständen zu ermöglichen.

Der Magnet ist vorzugsweise als Permanentmagnet ausgebildet. In Bezug auf den Magneten ist zudem denkbar, dass dieser mehrere Nordpole und mehrere Südpole aufweist.

Die Magnetisierungsrichtung ist eine Vorzugsrichtung, entlang welcher im räumlichen Mittel die Feldlinien von Nordpol nach Südpol verlaufen.

Die Wandungsstärke ist insbesondere die Dicke der Wandung gemessen in Richtung von der Längsachse nach radial außen.

Vorzugsweise verläuft die Magnetisierungsrichtung orthogonal zur Längsachse. Damit lässt sich mithilfe des Polschuhs über eine definierte Fläche eine hohe Kraftwirkung erreichen.

Die Greifvorrichtung kann ein Gehäuse aufweisen, in dem der Magnet entlang einer Längsachse verlagerbar ist. Das Gehäuse kann an seiner Mantelfläche Nuten zur Befestigung, beispielsweise von Sensoren, aufweisen.

Gemäß einer bevorzugten Ausgestaltung können die Wandungen umlaufend ausgebildet sein. In diesem Zusammenhang ist eine einteilige Ausgestaltung des Polschuhs denkbar. Neben einer stabilen Ausführung des Polschuhs ist dieser nach außen verschlossen, so dass die Führung des Magneten im Polschuh möglichst frei von Umwelteinflüssen ist. Zudem ist denkbar, dass die Wandungen sich ausgehend von den Bereichen der Pole in ihrem Verlauf um den Magneten herum verjüngen. Somit können in diesen Bereichen ganz gezielt Magnetkräfte auf den zu greifenden Gegenstand, beispielsweise ein Werkstück, ausgeübt werden sobald sich der Magnet in der Aktivstellung befindet.

Insbesondere können sich die Wandungen in entlang der Magnetisierungsrichtung verlaufenden Bereichen auf eine minimale Wandstärke von 0 bis 1 Millimeter verjüngen. In diesen Bereichen kann die Wandung abschnittsweise eben ausgebildet sein, wobei sich ein Normalenvektor auf den ebenen Abschnitt orthogonal zur Magnetisierungsrichtung erstreckt. Insbesondere kann der Normalenvektor auch parallel zur Anlagefläche orientiert sein, so dass der ebene Bereich senkrecht zur Anlagefläche verläuft. Die Verjüngung kann kontinuierlich, stufenförmig oder durch Ausbildung einer Ausnehmung oder Unterbrechung in der Wandung ausgeführt sein.

Zweckmäßigerweise können die Wandungen in entlang der Magnetisierungsrichtung verlaufenden Bereichen eine Unterbrechung aufweisen. Dies trägt zu einer gezielten Auswirkung von Magnetkräften auf den zu greifenden Gegenstand bei. In diesem Zusammenhang ist eine mehrteilige, insbesondere eine zweiteilige, Ausgestaltung des Polschuhs denkbar.

In vorteilhafter Weise kann die Unterbrechung durch eine Einlage aus nicht ferromagnetischem Material, insbesondere Aluminium oder Kunststoff, gefüllt sein. Hiermit ist bei einer hinreichenden Ausübung von Magnetkräften auf den zu greifenden Gegenstand ein Schutz der Führung des Magneten im Polschuh vor Umwelteinflüssen realisiert.

Im Konkreten können die Wandungsbereiche höherer Wandstärke an den Polen bezogen auf die Längsachse einander gegenüberliegen und der Polschuh kann orthogonal zur Magnetisierungsrichtung zwei Wandungsbereiche mit verjüngter Wandstärke aufweisen, die einander bezogen auf die Längsachse gegenüberliegen. Somit ist eine symmetrische Ausgestaltung eines Polschuhs geschaffen, wobei durch die einander gegenüberliegenden zwei Wandungsbereiche mit verjüngter Wandstärke eine symmetrische Krafteinwirkung auf einen zu greifenden Gegenstand ermöglicht ist.

Die Wandungen im Bereich der Pole können bogenförmig, insbesondere im Querschnitt kreisbogenförmig, oder abgewinkelt, insbesondere im Querschnitt trapezförmig, ausgebildet sein. Hiermit gelangen im Bereich der Pole nur vergleichsweise geringe Magnetkräfte aus dem Polschuh nach außen. Die Kanten des Polschuhs können, insbesondere im Bereich der Pole, abgerundet oder angefast sein.

Zweckmäßigerweise kann der Magnet in der Aktivstellung innerhalb des Polschuhs angeordnet sein. Magnetkräfte können dann durch den Polschuh auf den zu greifenden Gegenstand ausgeübt werden.

Gemäß einer bevorzugten Ausgestaltung kann bei Vorliegen der Aktivstellung das der Anlagefläche zugewandte untere Ende des Magneten von einer Ebene, in welcher die Anlagefläche verläuft, um einen Mindestabstand beabstandet sein. Dadurch wird ein Abstandsspalt, zum Beispiel ein Luftspalt, gebildet. Dies erleichtert ein Lösen oder Loslassen eines Gegenstands von der Greifvorrichtung. Es kann ein Einlegeelement aus nicht ferromagnetischem Material, insbesondere aus Aluminium oder Kunststoff, im Abstandsspalt vorgesehen sein. Dadurch ist der Abstandsspalt durch ein Einlegeelement gefüllt, so dass auch einzelne, ggf. verjüngte und bewegliche Abschnitte eines ergriffenen Gegenstands nicht bis zum Magneten gelangen können. Dies trägt zu einem zuverlässigen Loslassen von Gegenständen bei. Zudem kann der Magnet durch das Einlegeelement vor Umwelteinflüssen, insbesondere auch vor ferromagnetischen Partikeln, geschützt werden.

Im Konkreten kann der Magnet in der Passivstellung zumindest teilweise aus dem Polschuh in das Innere der Greifvorrichtung hinein verlagert sein. Dadurch wird die durch den Polschuh auf den Gegenstand eingeleitete Kraft so weit reduziert, dass der ergriffene Gegenstand losgelassen werden kann.

Im Rahmen einer alternativen Ausgestaltung kann - entlang der Längsachse gesehen - zwischen Anlagefläche und Magnet ein weiterer, bezogen auf den Polschuh ortsfester Magnet angeordnet sein. Befindet sich der verlagerbare Magnet am oder in unmittelbarer Nähe des ortsfesten Magneten, ist der ortsfeste Magnet "deaktiviert", d.h. es wird am Polschuh keine Greifkraft auf einen Gegenstand ausgeübt. Ist der verlagerbare Magnet entlang der Längsachse vom ortsfesten Magneten weg verlagert, wirkt der ortsfeste Magnet auf den Polschuh, so dass eine Greifkraft auf einen Gegenstand ausgeübt werden kann. Der ortsfeste Magnet kann als Kreisscheibe ausgebildet und mit seiner Mittellängsachse konzentrisch zur Längsachse des Polschuhs angeordnet sein.

In vorteilhafter Weise kann der Magnet bei Verlagerung zwischen der Aktivstellung und der Passivstellung um die Längsachse eine Drehbewegung durchführen. Damit ist eine Hubbewegung mit einer Drehbewegung kombiniert. Zwischen Aktivstellung und Passivstellung führt der Magnet eine Drehbewegung von maximal 90° um die Längsachse aus, entlang der der Magnet verlagerbar ist. Dadurch kann eine Krafteinstellung erfolgen und die Resthaltekräfte können reduziert werden. Zum Erreichen einer Drehbewegung kann der Magnet in einer, insbesondere am Polschuh oder am Gehäuse der Greifvorrichtung ausgebildeten, Kulissenführung oder durch einen Drehmotor geführt sein.

Der Magnet kann insbesondere als ein sich entlang einer Mittellängsachse erstreckender Körper ausgebildet sein, wobei die Magnetisierungsrichtung orthogonal zu der Mittellängsachse verläuft. Die Mittellängsachse kann parallel zur Längsachse ausgerichtet sein, entlang der der Magnet verlagerbar ist.

Beispielsweise kann der Magnet als Kreiszylinder, insbesondere als senkrechter Kreiszylinder, ausgebildet sein. Vorzugsweise erstreckt sich der Kreiszylinder entlang der Längsachse.

Zweckmäßigerweise kann der Polschuh durch eine Zwischenplatte aus nicht ferromagnetischem Material, insbesondere aus Aluminium oder Kunststoff, von der Greifvorrichtung getrennt sein. Dabei kann die Zwischenplatte zwischen Polschuh und Gehäuse der Greifvorrichtung (Magnetgehäuse) angeordnet sein. Hiermit ist sichergestellt, dass insbesondere in der Passivstellung keine oder nur vernachlässigbar geringe Magnetkräfte auf den Polschuh einwirken.

Vorteilhafterweise kann der Polschuh an der Anlagefläche einen Reibring aufweisen. Damit ist eine Relativbewegung zwischen dem ergriffenen Gegenstand und dem Polschuh des Magneten weitestgehend verhindert.

Alternativ oder ergänzend zu einem Reibring kann an der Anlagefläche ein, insbesondere im Querschnitt prismenförmiges, ferromagnetisches Greifelement (Polschuhverlängerung) befestigbar oder befestigt sein. Damit lassen sich Gegenstände mit rundem Querschnitt, insbesondere Rundstähle oder Rohre, handhaben, indem diese endseitig ergriffen werden. Im Falle eines Rohrs kann das das Greifelement ins Innere des Rohrs (hohler Kern) eingreifen.

In vorteilhafter Weise kann in der Greifvorrichtung ein ferromagnetisches Halteelement zum Halten des Magneten in der Passivstellung angeordnet sein. Auf diese Weise ist der Magnet in der Passivstellung gehalten, so dass im Falle eines pneumatischen Aktors bei Druckausfall Stabilität herrscht, d.h. der Magnet in Passivstellung verbleibt. Eine Verlagerung des Magneten erfolgt durch Ausüben einer Kraft auf den Magneten, im Falle des pneumatischen Aktors durch Beaufschlagung mittels zugeführter Druckluft über Druckanschlüsse.

Das ferromagnetische Halteelement kann als Stab, Quader, Ringabschnitt oder Ring ausgebildet sein. Ist das ferromagnetische Halteelement als Ringabschnitt oder Ring ausgeführt, kann dieses eine Wandung mit Abschnitten, insbesondere gegenüberliegenden Abschnitten, höherer Wandstärke aufweisen. Die Abschnitte höherer Wandstärke können bezogen auf die Längsachse, entlang der der Magnet in dem Polschuh verlagerbar ist, rechtwinklig zu den Wandungen mit höherer Wandstärke des Polschuhs ausgerichtet oder bezogen auf die Längsachse um 90° zu den Wandungen mit höherer Wandstärke des Polschuhs versetzt sein. Dadurch wird die Kraft des Magnetfeldes außerhalb des Halteelements reduziert. Ebenso wird die Resthaltekraft am Polschuh verringert.

Alternativ zu einer Drehbewegung bei Verlagerung des Magneten kann der Magnet drehfest um die Längsachse geführt sein. Auf diese Weise befindet sich der Magnet bezogen auf den Polschuh in einer definierten Orientierung. Beispielsweise kann der Magnet durch eine Nutenführung an der Greifvorrichtung, insbesondere einem Gehäuse der Greifvorrichtung, oder an dem Polschuh geführt sein.

Zweckmäßigerweise kann der Aktor als pneumatische Kolben-Zylinder-Einheit oder als elektrischer Antrieb ausgebildet sein. Der elektrische Antrieb kann als Elektromotor oder als Hubmagnet (Elektromagnet/Spule) ausgeführt sein. Der Hubmagnet ist zwischen einem aktivierten und einem deaktivierten Umstand umschaltbar. Damit ist eine Verlagerung des Magneten ermöglicht. Bei einer pneumatischen Kolben-Zylinder-Einheit kann an der Greifvorrichtung auf elektrische Energie verzichtet werden. Die Verwendung eines Elektromotors ist insbesondere dann von Vorteil, wenn keine Druckluft/kein Unterdruck vorhanden ist. Auch ein netzunabhängiger Betrieb ist möglich.

Im Hinblick auf eine flexible Einsetzbarkeit der Greifvorrichtung auch bei vergleichsweise hohen Temperaturen (Temperaturen bis ca. 200 °C) ist es von Vorteil, einen temperaturbeständigen Magneten und temperaturbeständige Dichtungen einzusetzen.

Gemäß einer alternativen Ausgestaltung kann ergänzend zu dem verlagerbaren Magneten ein weiterer Magnet im Polschuh angeordnet und am Polschuh befestigt sein. Der weitere Magnet ist bezogen auf den Polschuh nicht verlagerbar. Das der Anlagefläche zugewandte untere Ende des weiteren Magneten kann von einer Ebene, in welcher die Anlagefläche verläuft, um einen Mindestabstand beabstandet sein. Dadurch wird ein Abstandsspalt, zum Beispiel ein Luftspalt, gebildet. Der verlagerbare Magnet grenzt im Inneren der Greifvorrichtung an den weiteren Magneten an, der die Verlagerbarkeit des verlagerbaren Magneten in Richtung der Anlagefläche begrenzt. Die Magnetisierungsrichtung des weiteren Magneten ist entgegengesetzt zur Magnetisierungsrichtung des verlagerbaren Magneten. Befindet sich der verlagerbare Magnet am weiteren Magnet, ist die Greifvorrichtung inaktiv (Neutralisierung der Magnetkraft). Ist der verlagerbare Magnet vom weiteren Magneten weg verlagert, wird an der Anlagefläche eine Magnetkraft ausgeübt.

Die Erfindung wird nachfolgend anhand der Figuren näher erläutert. Es zeigen:
- Fig.1: in einer perspektivischen Ansicht eine erste Ausführungsform einer Greifvorrichtung;
- Fig.2: in einer perspektivischen Ansicht eine zweite Ausführungsform einer Greifvorrichtung; und
- Fig.3a,b: in geschnittenen Ansichten entlang der Achse A-A in Fig.1 die Greifvorrichtung aus Fig.1 mit Magnet in einer Aktivstellung (Fig.3a) und einer Passivstellung (Fig.3b); und
- Fig.4: in einer geschnittenen Ansicht eine dritte Ausführungsform einer Greifvorrichtung.

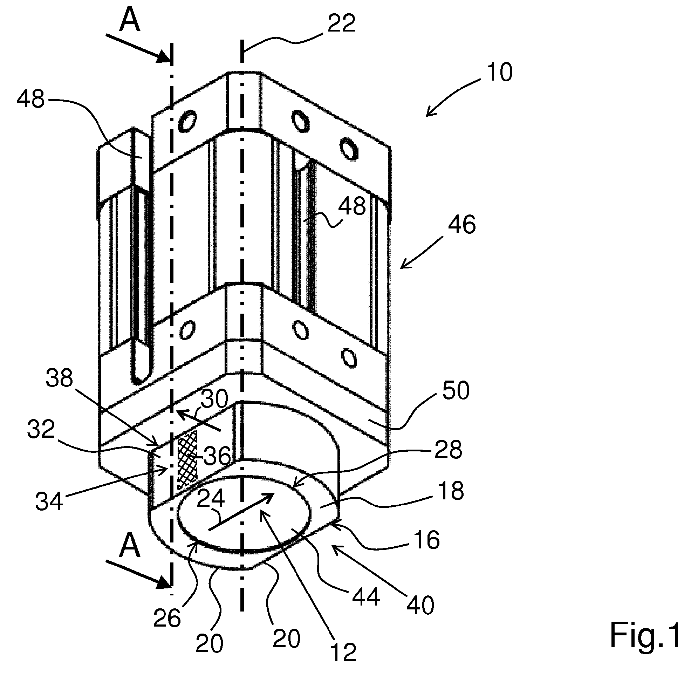

Figur 1 zeigt eine Greifvorrichtung zum Greifen und Anheben von ferromagnetischen Gegenständen, die insgesamt mit dem Bezugszeichen 10 bezeichnet ist.

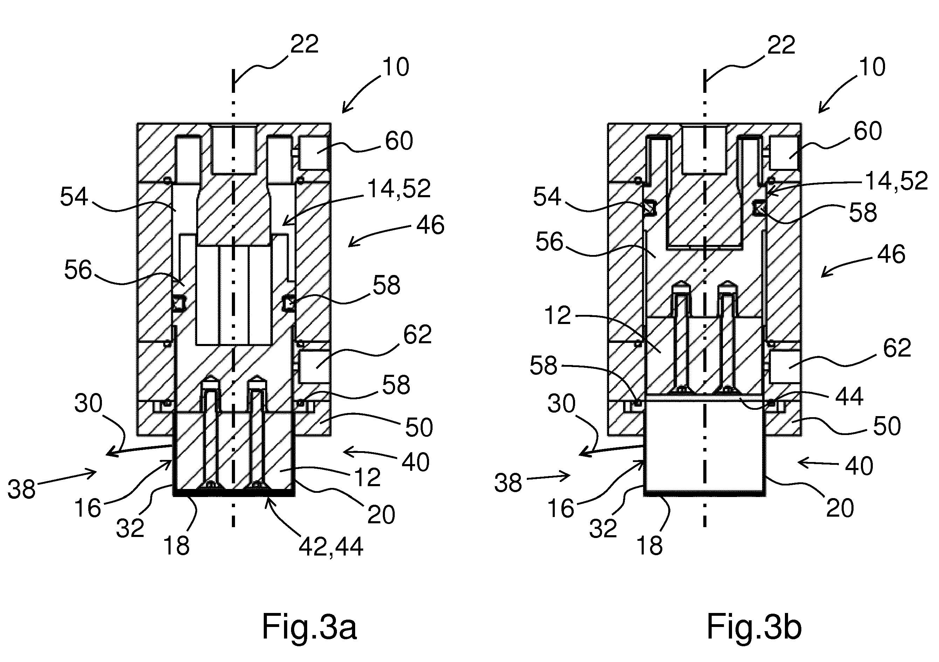

Die Greifvorrichtung 10 weist einen Magneten 12 in Form eines Permanentmagneten auf, der durch einen Aktor 14 zwischen einer Aktivstellung (Fig.3a) zum Greifen der Gegenstände und einer Passivstellung (Fig.3b) zum Loslassen verlagerbar ist.

Die Greifvorrichtung 10 weist außerdem einen Polschuh 16 mit einer Anlagefläche 18 für die zu greifenden Gegenstände auf (siehe Fig.1). Der Polschuh 16 weist Wandungen 20 auf, welche den Magneten 12 bezüglich einer Längsachse 22 nach außen umgeben und welche ein ferromagnetisches Material aufweisen.

Der Magnet 12 ist in dem Polschuh 16 entlang der Längsachse 22 verlagerbar. Der Magnet weist eine Magnetisierungsrichtung 24 von wenigstens einem Nordpol 26 zu wenigstens einem Südpol 28 auf.

Der Polschuh 16 ist derart ausgebildet, dass im Bereich der Pole 26, 28 die Wandungen 20 eine höhere Wandstärke aufweisen als in übrigen Bereichen des Polschuhs 16. Die Magnetisierungsrichtung 24 verläuft orthogonal zur Längsachse 22.

Die Wandungen 20 können umlaufend ausgebildet sein. Die Wandungen 20 verjüngen sich ausgehend von den Bereichen der Pole 26,28 in ihrem Verlauf um den Magneten 12 herum.

Die Wandungen 20 können sich in entlang der Magnetisierungsrichtung 24 verlaufenden Bereichen auf eine minimale Wandstärke verjüngen. In diesen Bereichen kann die Wandung 20 abschnittsweise eben ausgebildet sein, wobei sich ein Normalenvektor 30 auf den ebenen Abschnitt 32 orthogonal zur Magnetisierungsrichtung 24 erstreckt. Insbesondere kann der Normalenvektor 30 auch parallel zur Anlagefläche 18 orientiert sein, so dass der ebene Abschnitt 32 senkrecht zur Anlagefläche 18 verläuft.

Die Wandungen können in entlang der Magnetisierungsrichtung 24 verlaufenden Bereichen, insbesondere in dem ebenen Abschnitt 32, eine Unterbrechung 34 aufweisen (in Fig.1 durch Schraffierung angedeutet). Die Unterbrechung 34 kann durch eine Einlage 36 aus nicht ferromagnetischem Material gefüllt sein.

Die Wandungsbereiche höherer Wandstärke an den Polen 26, 28 liegen einander bezogen auf die Längsachse 22 gegenüber und der Polschuh 16 weist orthogonal zur Magnetisierungsrichtung 24 zwei Wandungsbereiche 38, 40 auf, die einander bezogen auf die Längsachse 22 gegenüberliegen.

Die Wandungen 20 können im Bereich der Pole 26, 28 bogenförmig ausgebildet sein (siehe Fig.1).

Der Magnet 12 ist in der Aktivstellung innerhalb des Polschuhs 16 angeordnet (siehe Fig.3a). Bei Vorliegen der Aktivstellung ist das der Anlagefläche 18 zugewandte untere Ende des Magneten 12 von einer Ebene, in welcher die Anlagefläche 18 verläuft, um einen Mindestabstand beabstandet. Dadurch wird ein Abstandsspalt 42 gebildet. Darin kann ein Einlegeelement 44 aus nicht ferromagnetischem Material angeordnet sein.

Der Magnet 12 ist in der Passivstellung zumindest teilweise aus dem Polschuh 16 in das Innere der Greifvorrichtung 10, insbesondere in das Innere eines Gehäuses 46, hinein verlagert. Das Gehäuse 46 kann Nuten 48 zur Befestigung von Komponenten, beispielsweise von Sensoren, aufweisen.

Der Magnet 12 ist als senkrechter Kreiszylinder ausgebildet. Der Polschuh 16 ist durch eine Zwischenplatte 50 aus nicht ferromagnetischem Material von der Greifvorrichtung 10 getrennt. Die Zwischenplatte 50 ist in dem Gehäuse 46 und dem Polschuh 16 angeordnet. Der Polschuh 16 weist an der Anlagefläche 18 einen Reibring auf (nicht dargestellt).

Der Aktor 14 ist als pneumatische Kolben-Zylinder-Einheit 52 ausgebildet. Die Greifvorrichtung 10 weist einen Zylinder 54 und einen darin laufenden Kolben 56 auf. Der Kolben 56 ist mittels Dichtungen 58 gegenüber dem Zylinder 54 abgedichtet. Zur Betätigung des Kolbens 56 sind Druckanschlüsse 60, 62 vorgesehen. Durch Beaufschlagung der Druckanschlüsse 60, 62 mit Druckluft oder Unterdruck lässt sich der Kolben 56 im Zylinder 54 verlagern. Der Magnet 12 kann somit in die Aktivstellung oder die Passivstellung verbracht werden. Auf den Druckanschluss 60 kann verzichtet werden, da sich der Magnet 12 auf Grund des ferromagnetischen Polschuhs 16 und die auf den Magneten 12 wirkende Gewichtskraft in die Aktivstellung (Magnet 12 im Polschuh 16) verlagert.

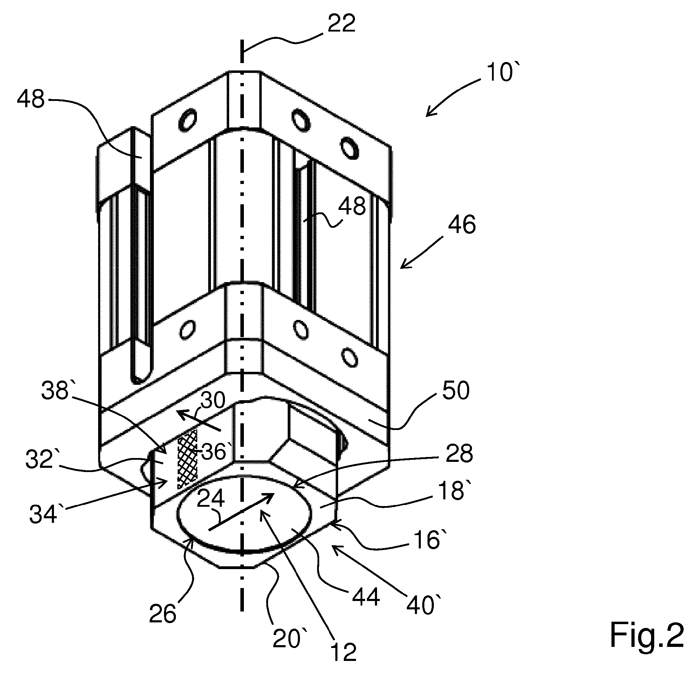

Figur 2 zeigt eine zweite Ausführungsform einer Greifvorrichtung 10', die der voranstehend beschriebenen ersten Ausführungsform der Greifvorrichtung 10 weitestgehend entspricht. Gleiche oder funktional gleiche Komponenten sind mit identischen Bezugszeichen wie in der ersten Ausführungsform versehen.

Abweichend von der ersten Ausführungsform weist die Greifvorrichtung 10' einen Polschuh 16' mit Wandungen 20' auf, die im Bereich der Pole 26, 28 abgewinkelt ausgebildet sind und insbesondere einen trapezförmigen Querschnitt aufweisen. Die Kanten des Polschuhs 16' können, insbesondere im Bereich der Pole 26, 28, abgerundet oder angefast sein.

Die Wandungen 20' können auch in dieser Ausführungsform in entlang der Magnetisierungsrichtung 24 verlaufenden Bereichen (ebener Abschnitt 32') eine Unterbrechung 34' aufweisen (in Fig.2 durch Schraffierung angedeutet). Die Unterbrechung 34' kann durch eine Einlage 36' aus nicht ferromagnetischem Material gefüllt sein.

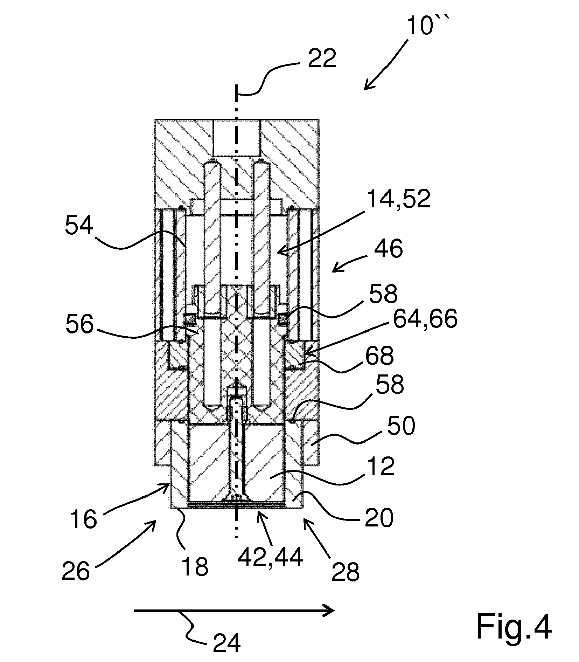

Figur 4 zeigt eine dritte Ausführungsform einer Greifvorrichtung 10", die weitestgehend der voranstehend beschriebenen ersten Ausführungsform entspricht. Gleiche oder funktionale gleiche Elemente sind mit identischen Bezugszeichen wie in der ersten Ausführungsform versehen.

Abweichend von der ersten Ausführungsform ist in der Greifvorrichtung 10" ein ferromagnetisches Halteelement 64 zum Halten des Magneten 12 in der Passivstellung angeordnet. Auf diese Weise ist der Magnet 12 in der Passivstellung gehalten. Eine Verlagerung des Magneten 12 erfolgt durch entsprechende Beaufschlagung mittels zugeführter Druckluft über die Druckanschlüsse 60, 62 (nicht dargestellt).

Das ferromagnetische Halteelement 64 ist als Ring 66 ausgebildet. Der Ring 66 weist eine Wandung 68 mit gegenüberliegenden Abschnitten höherer Wandstärke (nicht dargestellt). Die Abschnitte höherer Wandstärke sind bezogen auf die Längsachse 22 um 90° zu den Wandungen mit höherer Wandstärke des Polschuhs 16 versetzt angeordnet.

## Patentansprüche

1. Greifvorrichtung (10) zum Greifen von ferromagnetischen Gegenständen, mit einem Magneten (12), der durch einen Aktor (14) zwischen einer Aktivstellung zum Greifen der Gegenstände und einer Passivstellung verlagerbar ist, **dadurch gekennzeichnet, dass** ein Polschuh (16) mit einer Anlagefläche (18) für die zu greifenden Gegenstände vorgesehen ist, dass der Polschuh (16) Wandungen (20) aufweist, welche den Magneten (12) bezüglich einer Längsachse (22) nach außen umgeben und welche ein ferromagnetisches Material aufweisen, dass der Magnet (12) in dem Polschuh (16) entlang der Längsachse (22) verlagerbar ist, wobei der Magnet (12) eine Magnetisierungsrichtung (24) von wenigstens einem Nordpol (26) zu wenigstens einem Südpol (28) aufweist, und dass der Polschuh (16) derart ausgebildet ist, dass im Bereich der Pole (26, 28) die Wandungen (20) eine höhere Wandstärke aufweisen als in übrigen Bereichen des Polschuhs (16).

2. Greifvorrichtung (10) nach Anspruch 1, **dadurch gekennzeichnet, dass** die Magnetisierungsrichtung (24) orthogonal zur Längsachse (22) verläuft.

3. Greifvorrichtung (10) nach Anspruch 1 oder 2, **dadurch gekennzeichnet, dass** die Wandungen (20) umlaufend ausgebildet sind.

4. Greifvorrichtung (10) nach einem der vorherigen Ansprüche, **dadurch gekennzeichnet, dass** die Wandungen (20) sich ausgehend von den Bereichen der Pole (26, 28) in ihrem Verlauf um den Magneten (12) herum verjüngen.

5. Greifvorrichtung (10) nach einem der vorhergehenden Ansprüche, **dadurch gekennzeichnet, dass** die Wandungen (20) in entlang der Magnetisierungsrichtung (24) verlaufenden Bereichen eine Unterbrechung (34) aufweisen, vorzugsweise wobei die Unterbrechung (34) durch eine Einlage (36) aus nicht ferromagnetischem Material, insbesondere Aluminium oder Kunststoff, gefüllt ist.

6. Greifvorrichtung (10) nach einem der vorhergehenden Ansprüche, **dadurch gekennzeichnet, dass** die Wandungsbereiche höherer Wandstärke an den Polen (26, 28) bezogen auf die Längsachse (22) einander gegenüberliegen und dass der Polschuh (16) orthogonal zur Magnetisierungsrichtung (24) zwei Wandungsbereiche (38, 40) mit verjüngter Wandstärke aufweist, die einander bezogen auf die Längsachse (22) gegenüberliegen.

7. Greifvorrichtung (10) nach einem der vorhergehenden Ansprüche, **dadurch gekennzeichnet, dass** die Wandungen (20) im Bereich der Pole (26, 28) bogenförmig oder abgewinkelt ausgebildet sind.

8. Greifvorrichtung (10) nach einem der vorhergehenden Ansprüche, **dadurch gekennzeichnet, dass** der Magnet (12) in der Aktivstellung innerhalb des Polschuhs (16) angeordnet ist.

9. Greifvorrichtung (10) nach Anspruch 8, **dadurch gekennzeichnet, dass** bei Vorliegen der Aktivstellung das der Anlagefläche (18) zugewandte untere Ende des Magneten (12) von einer Ebene, in welcher die Anlagefläche (18) verläuft, um einen Mindestabstand beabstandet ist.

10. Greifvorrichtung (10) nach einem der vorhergehenden Ansprüche, **dadurch gekennzeichnet, dass** der Magnet (12) in der Passivstellung zumindest teilweise aus dem Polschuh (16) in das Innere der Greifvorrichtung (10) hinein verlagert ist.

11. Greifvorrichtung (10) nach einem der Ansprüche 1 bis 7, **dadurch gekennzeichnet, dass** entlang der Längsachse (22) zwischen Anlagefläche (18) und Magnet (12) ein weiterer, bezogen auf den Polschuh (16) ortsfester Magnet angeordnet ist.

12. Greifvorrichtung (10) nach einem der vorhergehenden Ansprüche, **dadurch gekennzeichnet, dass** der Magnet (12) bei Verlagerung zwischen der Aktivstellung und der Passivstellung um die Längsachse (22) eine Drehbewegung durchführt.

13. Greifvorrichtung (10) nach einem der vorhergehenden Ansprüche, **dadurch gekennzeichnet, dass** der Polschuh (16) durch eine Zwischenplatte (50) aus nicht ferromagnetischem Material, insbesondere Aluminium oder Kunststoff, von der Greifvorrichtung (10) getrennt ist.

14. Greifvorrichtung (10) nach einem der vorhergehenden Ansprüche, **dadurch gekennzeichnet, dass** in der Greifvorrichtung (10) ein ferromagnetisches Halteelement (64) zum Halten des Magneten (12) in der Passivstellung angeordnet ist.

15. Greifvorrichtung (10) nach einem der vorhergehenden Ansprüche, **dadurch gekennzeichnet, dass** der Aktor (14) als pneumatische Kolben-Zylinder-Einheit (52) oder als elektrischer Antrieb ausgebildet ist.
